# EUROPÄISCHE PATENTSCHRIFT

(11) **EP 1 776 807 B1**
(45) Veröffentlichungstag und Bekanntmachung des Hinweises auf die Patenterteilung: **16.12.2009**
(21) Anmeldenummer: 05760912.5
(22) Anmeldetag: 29.06.2005
(51) Int. Cl.: H04L 12/56

(54) **VERFAHREN UND VORRICHTUNG ZUM ZUGRIFF AUF DATEN EINES BOTSCHAFTSSPEICHERS EINES KOMMUNIKATIONSBAUSTEINS**
METHOD AND DEVICE FOR ACCESSING DATA OF A MESSAGE MEMORY OF A COMMUNICATION COMPONENT
PROCEDE ET DISPOSITIF PERMETTANT D'ACCEDER A DES DONNEES D'UNE MEMOIRE DE MESSAGES D'UN MODULE DE COMMUNICATION

(30) Priorität: 05.08.2004 DE 102004038213
(43) Veröffentlichungstag der Anmeldung: 25.04.2007
(73) Patentinhaber: ROBERT BOSCH GMBH, 70442 Stuttgart (DE)
(72) Erfinder: HARTWICH, Florian, 72762 Reutlingen (DE); HORST, Christian, 72144 Dusslingen (DE); BAILER, Franz, 72770 Reutlingen (DE)
(86) Internationale Anmeldenummer: PCT/EP2005/053077
(87) Internationale Veröffentlichungsnummer: WO 2006/015911

(56) Entgegenhaltungen:
- EP-A- 0 593 195
- WO-A-01/05123
- WO-A-01/86869
- US-A1- 2003 174 708

## Beschreibung

### Stand der Technik

Die Erfindung betrifft ein Verfahren und eine Vorrichtung für den Zugriff auf Daten eines Botschaftsspeichers eines Kommunikationsbausteins durch Eingeben oder Ausgeben von Daten in oder aus dem Botschaftsspeicher gemäß der unabhängigen Ansprüche.

Die Vernetzung von Steuergeräten, Sensorik und Aktuatorik mit Hilfe eines Kommunikationssystems und eines Bussystems, also einer Kommunikationsverbindung hat in den letzten Jahren beim Bau von modernen Kraftfahrzeugen oder auch im Maschinenbau, insbesondere im Werkzeugmaschinenbereich also auch in der Automatisierung, drastisch zugenommen. Synergieeffekte durch Verteilung von Funktionen auf mehrere Steuergeräte können dabei erzielt werden. Man spricht hierbei von verteilten Systemen. Die Kommunikation zwischen verschiedenen Stationen findet mehr und mehr über ein Bussystem, also ein Kommunikationssystem statt. Der Kommunikationsverkehr auf dem Bussystem, Zugriffs- und Empfangsmechanismen sowie Fehlerbehandlung werden über ein Protokoll geregelt Ein bekanntes Protokoll hierzu ist das CAN-Protokoll oder auch das TTCAN-Protokoll sowie das FlexRay-Protokoll, wobei im Augenblick die FlexRay-Protokollspezifiktation V2.0 zugrunde liegt. Der FlexRay ist dabei ein schnelles, deterministisches und fehlertolerantes Bussystem, insbesondere für den Einsatz in einem Kraftfahrzeug. Das FlexRay-Protokoll arbeitet nach dem Verfahren des Time-Division-Multiple-Access (TDMA), wobei den Komponenten, also Teilnehmern bzw. den zu übertragenden Botschaften feste Zeitschlitze zugewiesen werden, in denen sie ein exklusiven Zugriff auf die Kommunikationsverbindung haben. Vergleichbar wird dies auch beim TTCAN umgesetzt. Die Zeitschlitze wiederholen sich dabei in einem festgelegten Zyklus, sodass der Zeitpunkt, zu dem eine Botschaft über den Bus übertragen wird, exakt vorausgesagt werden kann und der Buszugriff deterministisch erfolgt. Um die Bandbreite für die Botschaftsübertragung auf dem Bussystem optimal zu nutzen unterteilt der FlexRay den Zyklus in einen statischen und einen dynamischen Teil. Die festen Zeitschlitze befinden sich dabei im statischen Teil am Anfang eines Buszyklussees. Im dynamischen Teil werden die Zeitschlitze dynamisch vergeben. Darin wird nun der exklusive Buszugriff jeweils nur für eine kurze Zeit, sogenannte Minislots, ermöglicht Nur wenn innerhalb eines Minislots ein Buszugriff erfolgt, wird der Zeitschlitz um die benötigte Zeit verlängert. Damit wird Bandbreite also nur verbraucht, wenn sie auch tatsächlich benötigt wird. Dabei kommuniziert FlexRay über zwei physikalisch getrennte Leitungen mit einer Datenrate von je maximal 10MB pro Sekunde. Die beiden Kanäle entsprechen dabei der physikalischen Schicht, insbesondere des OSI (Open System Architecture) Schichtenmodells. Diese dienen nun hauptsächlich der redundanten und damit fehlertoleranten Übertragung von Botschaften, können jedoch auch unterschiedliche Botschaften übertragen, wodurch sich dann die Datenrate verdoppeln würde. FlexRay kann aber auch mit niedrigeren Datenraten betrieben werden.

Um synchrone Funktionen zu realisieren und die Bandbreite durch kleine Abstände zwischen zwei Botschaften zu optimieren, benötigen die verteilten Komponenten im Kommunikationsnetzwerk, also die Teilnehmer, eine gemeinsame Zeitbasis, die sogenannte globale Zeit. Für die Uhrensynchronisation werden Synchronisationsnachrichten im statischen Teil des Zyklus übertragen, wobei mit Hilfe eines speziellen Algorhytmus entsprechend der FlexRaySpezifikation die lokale Uhrzeit einer Komponente so korrigiert wird, dass alle lokalen Uhren zu einer globalen Uhr synchron laufen. Diese Synchronisation erfolgt vergleichbar auch in einem TTCAN-Netzwerk.

Ein FlexRay-Netzknoten oder FlexRay-Teilnehmer oder Host enthält einen Teilnehmerprozessor, also den Hostprozessor, einen FlexRay-Controller oder Kommunikationscontroller sowie bei einer Busüberwachung einen Busguardian. Dabei liefert und verarbeitet der Host-Prozessor, also der Teilnehmerprozessor die Daten, die über den FlexRay-Kommunikationscontroller übertragen werden. Für die Kommunikation in einem FlexRay-Netzwerk können Botschaften bzw. Botschaftsobjekte mit z. B. bis zu 254 Datenbytes konfiguriert werden. Um nun diese Botschaften bzw. Botschaftsobjekte zwischen physikalischer Schicht also der Kommunikationsverbindung und dem Host-Prozessor zu übertragen, wird ein Kommunikationsbaustein, insbesondere ein Kommunikationscontroller, eingesetzt.

Zugriffe auf den Botschaftsspeicher eines Kommunikationsbausteins insbesondere eines FlexRay-Kommunikationscontroller erfolgen sowohl durch die Host-Prozessoreinheit, also die Host-CPU, als auch über Schnittstellenbausteine zur physikalischen Schicht. Der Zugriff auf die Host-CPU umfasst dabei das Schreiben und Lesen von Konfigurationsdaten, Statusdaten und den eigentlich zu sendenden Daten. Der Zugriff der Schnittstellenbausteine zur physikalischen Schicht umfasst dabei Sendebotschaften lesen, empfangene Botschaften abspeichern wobei in beiden Fällen die Integrität der Botschaften durch geeignete Maßnahmen sicherzustellen ist.

Die US 2003/0174708 A1 zeigt dazu einen Hochgeschwindigkeitsspeicher mit einer modularen Struktur. Darin ist eine Pufferung von insbesondere Botschaften vorgesehen, um deren vollständigen Empfang zu gewährleisten. Unter ungewöhnlichen Bedingungen ist es dennoch möglicht, dass der dazu vorgesehene Speicherplatz nicht ausreicht.

Es ist daher Aufgabe der Erfindung, die Datenübertragung zwischen Host-CPU, also Teilnehmerprozessor, und dem Botschaftsspeicher bezüglich Übertragungsgeschwindigkeit und Datenintegrität zu optimieren.

### Vorteile der Erfindung

Zur Lösung dieser Aufgabe geht die Erfindung aus von einem Verfahren und einer Vorrichtung für den Zugriff auf Daten eines Botschaftsspeichers, durch Eingeben oder Ausgeben von Daten in oder aus dem Botschaftsspeicher, wobei der Botschaftsspeicher mit einer Pufferspeicheranordnung verbunden ist.

Die Pufferspeicheranordnung umfasst dabei einen ersten Pufferspeicher, welcher vorteilhafterweise jeweils in einen Teüpufferspeicher und einen Schattenspeicher für den Teilpufferspeicher aufgeteilt ist, wobei folgende Schritte ausgeführt werden: Eingeben von Daten in den jeweiligen Teilpufferspeicher und Vertauschen des Zugriffs auf Teilpufferspeicher und Schattenspeicher, sodass nachfolgende Daten in den Schattenspeicher eingegeben werden können, während die eingegebenen Daten bereits aus dem Teilpufferspeicher in der vorgesehenen Übertragungsrichtung ausgegeben werden.

Das heißt vorteilhafterweise ist ein Pufferspeicher für den Zugriff auf Daten eines Botschaftsspeichers vorgesehen wobei der Pufferspeicher einen Teilpufferspeicher und einen Schattenspeicher des Teilpufferspeichers enthält und Mittel vorgesehen sind, durch welche der Zugriff auf den Teilpufferspeicher und den Schattenspeicher vertauscht wird. Die vorgestellte Erfindung hat den Vorteil, dass durch dieses Vertauschen die Übertragungsgeschwindigkeit deutlich erhöht werden kann und durch die Zweiteilung des Pufferspeichers ein wechselseitiges Beschreiben und Lesen möglich ist sodass beim Datentransfer ein gleichzeitiger Zugriff auf gleiche Speicherzellen entfällt und damit die Datenintegrität sichergestellt ist.

In einer vorteilhaften Ausgestaltung der Erfindung wird eine Pufferspeicheranordnung für den Zugriff auf Daten eines Botschaftsspeichers eine Kommunikationsbausteins eingeführt, mit einem Eingangspufferspeicher und einem Ausgangspufferspeicher wobei der Eingangspufferspeicher einen ersten Teilpufferspeicher und einen ersten Schattenspeicher enthält und der Ausgangspufferspeicher einen zweiten Teilpufferspeicher und einen zweiten Schattenspeicher enthält wobei erste Mittel vorgesehen sind, durch welche der Zugriff auf den ersten Teilpufferspeicher und den ersten Schattenspeicher vertauscht wird und zweite Mittel vorgesehen sind durch welche der Zugriff auf den zweiten Teilpufferspeicher und den zweiten Schattenspeicher vertauscht wird.

D. h. die Erfindung beschreibt ein Verfahren und eine Vorrichtung zum Datentransfer zwischen Host-CPU und Botschaftsspeicher durch Zwischenschalten einer Pufferspeicheranordnung insbesondere eines Eingangspuffers für das Schreiben und eines Ausgangspuffers für das Lesen von den Zugriffen der Sende- und Empfangseinheiten zu entkoppeln. Dabei werden insbesondere durch den Message-Handler also den Botschaftsverwalter alle Zugriffe gesteuert und kontrolliert, die den Botschaftsspeicher betreffen wodurch die geforderte Datenintegrität der gespeicherten Botschaften sichergestellt wird.

Vorteilhafterweise wird das Vertauschen auf Teilpufferspeicher und Schattenspeicher durch eine Kennung angezeigt oder in einer besonderen Ausführungsform durch die Kennung ausgelöst.

Zweckmäßigerweise werden die Daten in Botschaften übertragen und die Botschaften werden mit einer Botschaftskennung versehen wobei das Vertauschen des Zugriffs auf Teilpufferspeicher und Schattenspeicher dann erfolgt, wenn die Botschaftskennung in ein vorgebbares Register eingeschrieben wird.

Insbesondere vorteilhaft ist dabei, dass die Daten in einer Botschaft wenigstens in erste Daten also Konfigurationsdaten, Statusdaten und zweite Daten, also die eigentlich zu übertragenden Daten aufgeteilt sind, wobei abhängig von wenigstens einer Datenkennung entweder nur die ersten Daten oder nur die zweiten Daten oder erste und zweite Daten übertragen werden.

Zweckmäßigerweise kann der Zugriff auf die Daten durch eine Zugriffskennung, welche in einem Register eintragen wird, angezeigt werden. Vorteilhafterweise ist aus der Zugriffskennung selbst oder aus ihrer Position in dem Register eine Information ermittelbar, auf welchen Teilpufferspeicher oder welchen Schattenspeicher gerade zugegriffen wird.

Zweckmäßigerweise werden beim Vertauschen des Zugriffs auch wenigstens teilweise Registereinträge, insbesondere vorgenannte Kennungen, in Registern vertauscht.

Zur Auslösung der Vertauschen des Zugriffs auf Teilpufferspeicher und Schattenspeicher kann zweckmäßigerweise eine Umschaltkennung vorgesehen sein.

Weiterhin kann zweckmäßigerweise für wenigstens eine Übertragungsrichtung eine Startkennung in einem Register eingetragen werden wenn die Daten in einen Speicher geschrieben werden sollen.

Durch diese Erfindung mit der Pufferspeicheranordnung und den enthaltenen Eingangs- und Ausgangspufferspeichern sowie der Zugriffsvertauschung wird sichergestellt, dass eine Host-CPU trotz der modulinternen Latenzzeiten unterbrechungsfrei auf den Botschaftsspeicher zugreifen kann. Durch die optimale Speicherausnutzung und die Unterbrechungsfreiheit wird zum einen die Übertragungsgeschwindigkeit erhöht, gleichzeitig wird durch die Erfindung die Datenintegrität sichergestellt.

Weitere Vorteile und vorteilhafte Ausgestaltungen ergeben sich aus den Merkmalen der Ansprüche sowie aus der Beschreibung der Ausführungsbeispiele.

### Zeichnung

Die Erfindung wird anhand der nachfolgenden Figuren der Zeichnung näher erläutert.

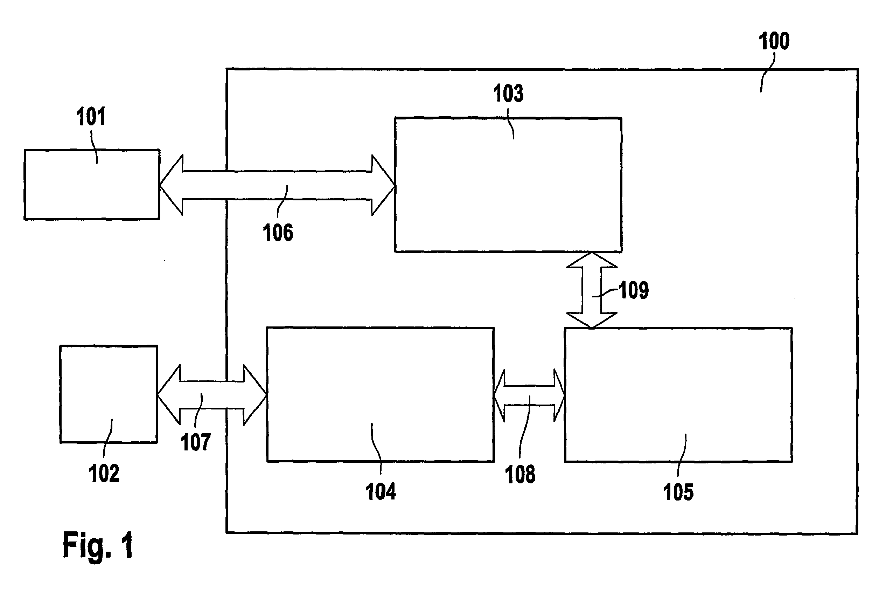

Dabei zeigt Figur 1 in schematischer Darstellung den Kommunikationsbaustein und dessen Anbindung an die physikalische Schicht, also die Kommunikationsverbindung und den Kommunikations- oder Host-Teilnehmer.

Figur 2 stellt in einer speziellen Ausführungsform den Kommunikationsbaustein aus Figur 1 sowie dessen Anbindung detaillierter dar.

In Figur 3 ist die Struktur des Botschaftsspeichers dargestellt.

Figur 4 bis 6 beschreibt schematisch die Architektur und den Prozess des Datenzugriffs in Richtung vom Teilnehmer zum Botschaftsspeicher.

Figur 7 bis 9 beschreibt schematisch Architektur und Prozess des Datenzugriffs in Richtung vom Botschaftsspeicher zum Teilnehmer.

In Figur 10 ist der Botschaftsverwalter und die darin enthaltenen Finite-State-Maschinen schematisch dargestellt.

Figur 11 zeigt noch einmal schematisch die Bauteile des Kommunikationsbausteins sowie den Teilnehmer und die entsprechenden, durch den Botschaftsverwalter gesteuerten Datenpfade.

Figur 12 beschreibt die Zugriffsverteilung bezogen auf die Datenpfade in Figur 11.

Die Erfindung wird nachfolgend anhand der Ausführungsbeispiele näher erläutert.

### Ausführungsbeispiele

Figur 1 zeigt schematisch einen FlexRay-Kommunikationsbaustein 100 zur Anbindung eines Teilnehmers oder Hosts 102 an eine FlexRay-Kommunikationsverbindung 101, also die physikalische Schicht des FlexRay. Dazu ist der FlexRay-Kommunikationsbaustein 100 über eine Verbindung 107 mit dem Teilnehmer bzw. Teilnehmerprozessor 102 und über eine Verbindung 106 mit der Kommunikationsverbindung 101 verbunden. Zur problemlosen Anbindung zum einen bezogen auf Übertragungszeiten und zum anderen bezogen auf die Datenintegrität sind schematisch im Wesentlichen drei Anordnungen im FlexRay-Kommunikationsbaustein unterschieden. Dabei dient eine erste Anordnung 105 zur Speicherung, insbesondere Zwischenablage, wenigstens eines Teils der zu übertragenden Botschaften. Zwischen dem Teilnehmer 102 und dieser ersten Anordnung 105 ist über die Verbindungen 107 und 108 eine zweite Anordnung 104 geschaltet Ebenso ist zwischen Teilnehmer 101 und die erste Anordnung 105 eine dritte Anordnung 103 über die Verbindungen 106 und 109 geschaltet, wodurch ein sehr flexibles Eingeben und Ausgeben von Daten als Teil von Botschaften, insbesondere FlexRay-Botschaften in bzw. aus der ersten Anordnung 105 mit Gewährleistung der Datenintegrität bei optimaler Geschwindigkeit erzielbar ist.

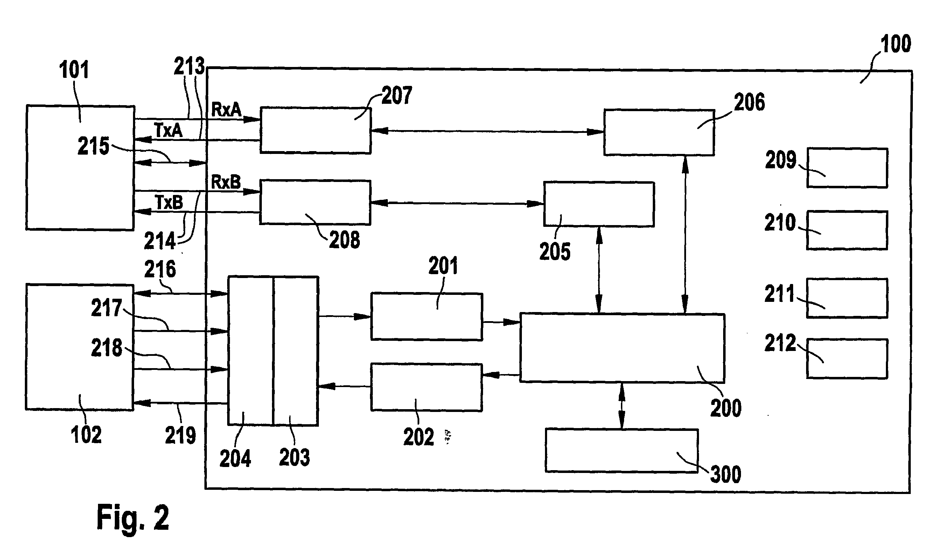

In Figur 2 ist dieser Kommunikationsbaustein 100 in einer bevorzugten Ausführungsform noch einmal detaillierter dargestellt. Ebenso detaillierter dargestellt sind die jeweiligen Verbindungen 106 bis 109. Die zweite Anordnung 104 enthält dabei einen Eingangspufferspeicher oder Eingabepufferspeicher 201 (Input Buffer IBF), einen Ausgangspufferspeicher oder Ausgabepufferspeicher 202 ( Output Buffer OBF) sowie einen Schnittstellenbaustein bestehend aus zwei Teilen 203 und 204, wobei der eine Teilbaustein 203 teilnehmerunabhängig und der zweite Teilbaustein 204 teilnehmerspezifisch ist. Der teilnehmerspezifische Teilbaustein 204 (Customer CPU Interface CIF) verbindet eine teilnehmerspezifische Host-CPU 102, also einen kundenspezifischen Teilnehmer mit dem FlexRay-Kommunikationsbaustein. Dazu ist eine bidirektionale Datenleitung 216, eine Adressleitung 217 sowie ein Steuereingang 218 vorgesehen. Ebenso vorgesehen ist mit 219 ein Interrupt- oder Unterbrechungs-Ausgang. Der teilnehmerspezifische Teilbaustein 204 steht in Verbindung mit einem teilnehmerunabhängigen Teilbaustein 203 (Generic CPU Interface, GIF), d. h. der FlexRay-Kommunikationsbaustein oder das FlexRay-IP-Modul verfügt über ein generisches, also allgemeines, CPU-Interface, an das sich über entsprechende teilnehmerspezifische Teilbausteine, also Customer CPU Interfaces CIF eine große Anzahl von unterschiedlichen kundenspezifischen Host CPU's anschließen lassen. Dadurch muss abhängig vom Teilnehmer nur der Teilbaustein 204 variiert werden, was einen deutlich geringeren Aufwand bedeutet.

Der Eingabepufferspeicher oder Eingangspufferspeicher 201 und der Ausgangspufferspeicher oder Ausgabepufferspeicher 202 können in einem Speicherbaustein oder aber in getrennten Speicherbausteinen ausgebildet sein. Dabei dient der Eingabepufferspeicher 201 für die Zwischenspeicherung von Botschaften für die Übertragung zum Botschaftsspeicher 200. Dabei ist der Eingabepufferbaustein vorzugsweise so ausgebildet, dass er zwei vollständige Botschaften bestehend aus jeweils einem Kopfsegment oder Headersegment, insbesondere mit Konfigurationsdaten und ein Datensegment oder Payload Segment speichern kann. Dabei ist der Eingabepufferspeicher zweiteilig (Teilpufferspeicher und Schattenspeicher) ausgebildet, wodurch sich durch wechselweises Schreiben der beiden Teile des Eingabepufferspeichers bzw. durch Zugriffswechsel die Übertragung zwischen Teilnehmer-CPU 102 und Botschaftsspeicher 200 beschleunigen lässt Ebenso dient der Ausgabepufferspeicher oder Ausgangspufferspeicher (Output-Buffer OBF) für die Zwischenspeicherung von Botschaften für die Übertragung vom Botschaftsspeicher 200 zur Teilnehmer-CPU 102. Dabei ist auch der Ausgabepuffer 202 so gestaltet, dass zwei komplette Botschaften bestehend aus Kopfsegment, insbesondere mit Konfigurationsdaten und Datensegment, also Payload Segment, gespeichert werden können. Auch hier ist der Ausgabepufferspeicher 202 in zwei Teile, einen Teilpufferspeicher und einen Schattenspeicher aufgeteilt, wodurch sich auch hier durch wechselweises Lesen der beiden Teile die Übertragung bzw. durch Zugriffswechsel die Übertragung zwischen Teilnehmer- bzw. Host-CPU 102 und Botschaftsspeicher 200 beschleunigen lässt. Diese zweite Anordnung 104 bestehend aus den Blöcken 201 bis 204 ist mit der ersten Anordnung 105 wie dargestellt verbunden.

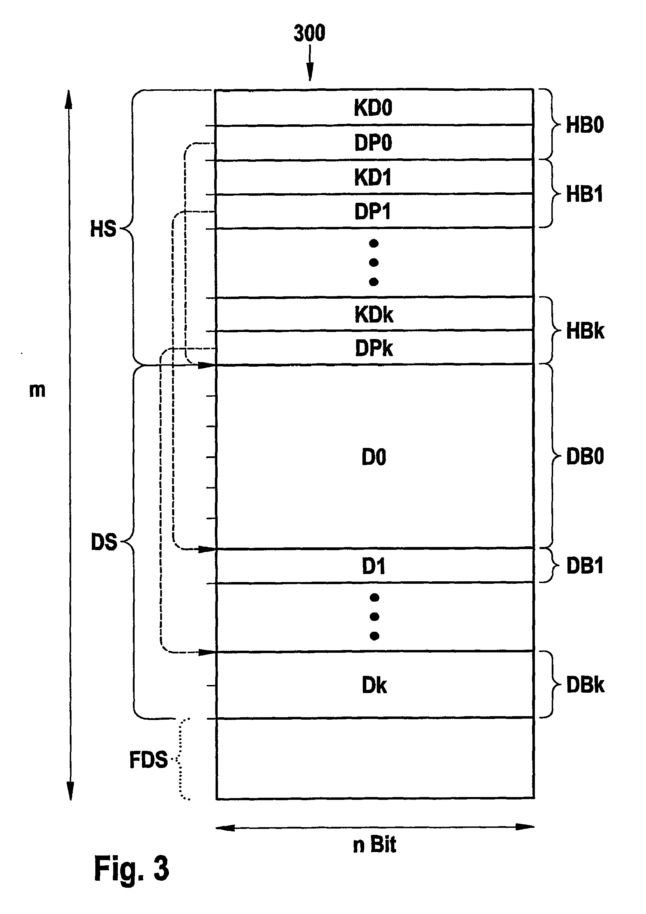

Die Anordnung 105 besteht aus einem Botschaftsverwalter 200 (Message Handler MHD) und einem Botschaftsspeicher 300 (Message RAM). Der Botschaftsverovalter kontrolliert bzw. steuert den Datentransfer zwischen dem Eingabepufferspeicher 201 sowie Ausgabepufferspeicher 202 und dem Botschaftsspeicher 300. Gleichermaßen kontrolliert bzw. steuert er die Datenübertragung in der anderen Richtung über die dritte Anordnung 103. Der Botschaftsspeicher ist vorzugsweise als single-ported RAM ausgeführt. Dieser RAM-Speicher speichert die Botschaften bzw. Botschaftsobjekte, also die eigentlichen Daten, zusammen mit Konfigurations- und Statusdaten. Die genaue Struktur des Botschaftsspeichers 300 ist in Figur 3 näher dargestellt.

Die dritte Anordnung 103 besteht aus den Blöcken 205 bis 208. Entsprechend den beiden Kanälen des FlexRay Physical Layer ist diese Anordnung 103 in zwei Datenpfade mit je zwei Datenrichtungen aufgeteilt. Dies wird durch die Verbindungen 213 und 214 deutlich, worin die beiden Datenrichtungen für den Kanal A, RxA und TxA für Empfangen (RxA) und Senden (TxA) sowie für Kanal B, RxB und TxB dargestellt sind. Mit Verbindung 215 ist ein optionaler bidirektionaler Steuereingang bezeichnet. Die Anbindung der dritten Anordnung 103 erfolgt über einen ersten Pufferspeicher 205 für Kanal B und einen zweiten Pufferspeicher 206 für Kanal A. Diese beiden Pufferspeicher (Transient Buffer RAM's: RAM A und RAM B) dienen als Zwischenspeicher für die Datenübertragung von bzw. zu der ersten Anordnung 105. Entsprechend der beiden Kanäle sind diese beiden Pufferspeicher 205 und 206 mit jeweils einem Schnittstellenbaustein 207 und 208 verbunden, die die FlexRay-Protokoll-Controller oder Busprotokoll-Controller bestehend aus einem Sende-/Empfangs-Schieberegister und der FlexRay Protokoll Finite State Maschine, enthalten. Die beiden Pufferspeicher 205 und 206 dienen somit als Zwischenspeicher für die Datenübertragung zwischen den Schieberegistern der Schnittstellenbausteine oder FlexRay Protokoll Controller 207 und 208 und dem Botschaftsspeicher 300. Auch hier werden vorteilhafter Weise durch jeden Pufferspeicher 205 oder 206 die Datenfelder, also das Payload Segment oder Datensegment zweier FlexRay-Botschaften gespeichert.

Weiterhin dargestellt im Kommunikationsbaustein 100 ist mit 209 die globale Zeiteinheit (Global Time Unit GTU), welche für die Darstellung der globalen Zeitraster im FlexRay, also den Mikrotick µT und den Makrotick MT zuständig ist. Ebenso wird über die globale Zeiteinheit 209 die fehlertolerante Uhrensynchronisation der Zykluszähler (Cycle Counter) und die Kontrolle der zeitlichen Abläufe im statischen und dynamischen Segment des FlexRay geregelt.

Mit Block 210 ist die allgemeine Systemsteuerung (System Universal Control SUC) dargestellt, durch welche die Operationsmodi des FlexRay-Kommunikationscontroller kontrolliert und gesteuert werden. Dazu gehören der Wakeup, der Startup, die Reintegration bzw. Integration, Normaloperation (normal operation) und passive Operation (passive operation).

Block 211 zeigt das Netzwerk und Fehlermanagement (Network- und Error Management NEM), wie in der FlexRay-Protokollspezifiktaion v2.0 beschrieben. Block 212 schließlich zeigt die Unterbrechungssteuerung (Interrupt Control INT), welche die Status- und Fehlerunterbrechungsflaggen (status and error interrupt flags) verwaltet und die Unterbrechungsausgänge 219 zur Teilnehmer-CPU 102 kontrolliert bzw. steuert. Der Block 212 enthält außerdem einen absoluten und einen relativen Timer bzw. Zeitgeber zur Erzeugung der Zeitunterbrechungen oder Timerinterrupts.

Für die Kommunikation in einem FlexRay-Netzwerk können Botschaftsobjekte bzw. Botschaften (Message Buffer) mit bis zu 254 Datenbytes konfiguriert werden. Der Botschaftsspeicher 300 ist insbesondere ein Botschafts-RAM-Speicher (Message RAM), welcher z.B. bis zu maximal 64 Botschaftsobjekten speichern kann. Alle Funktionen, die die Behandlung bzw. Verwaltung der Botschaften selbst betreffen, sind dem Botschaftsverwalter oder Message Handler 200 implementiert. Dies sind z.B. die Akzeptanzfilterung, Transfer der Botschaften zwischen den beiden FlexRay-Protokoll-Controller-Blöcken 207 und 208 und dem Botschaftsspeicher 300, also dem Message RAM sowie die Kontrolle der Sendereihenfolge und das Bereitstellen von Konfigurationsdaten bzw. Statusdaten.

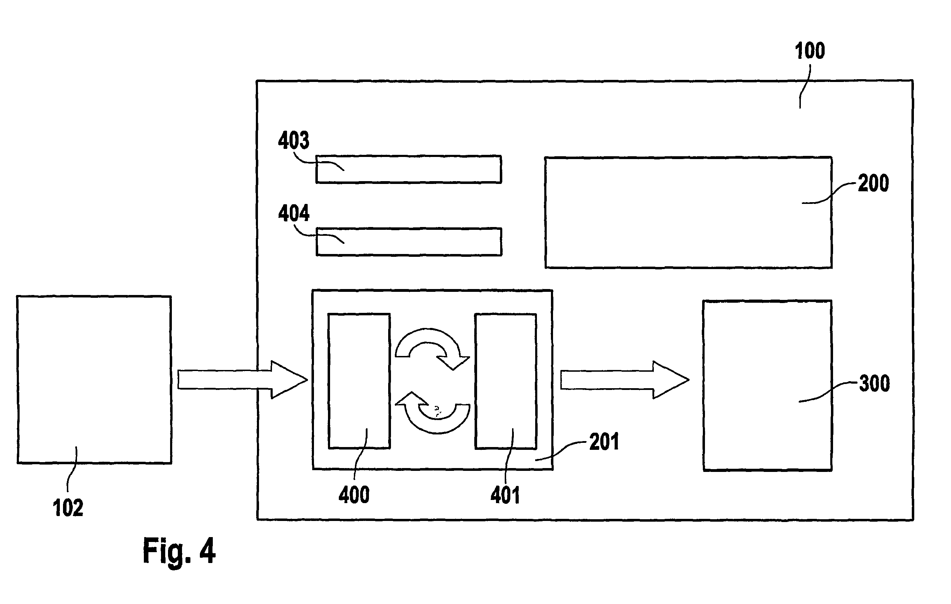

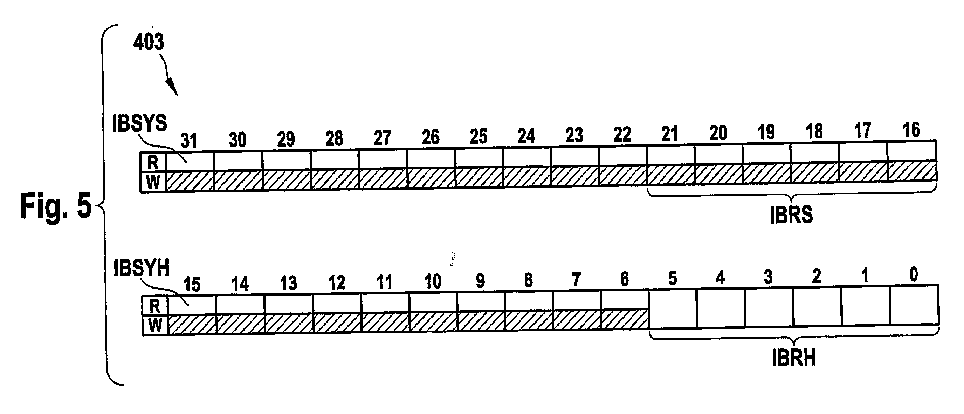

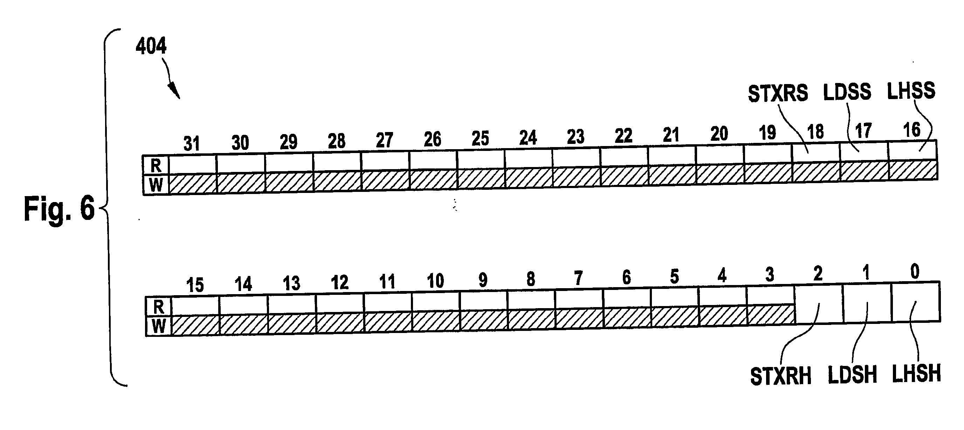

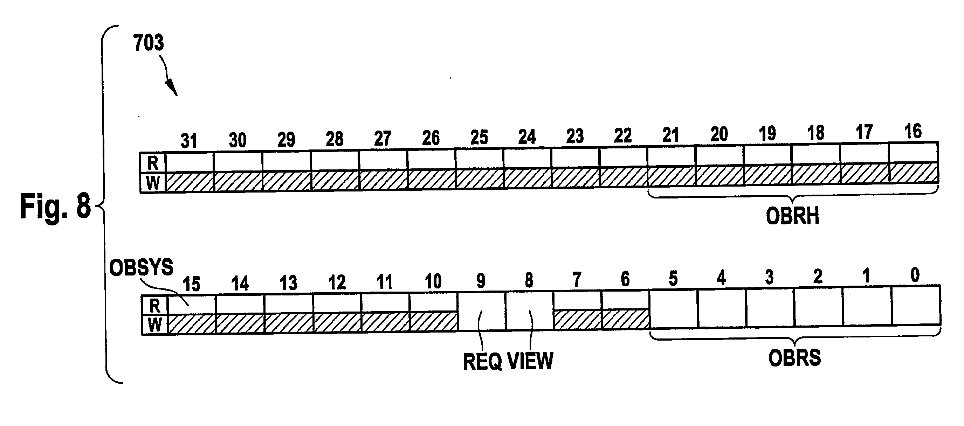

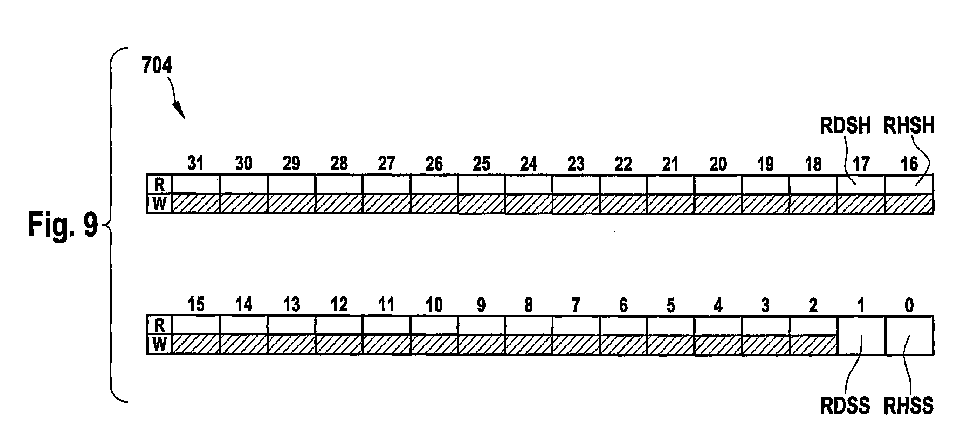

Eine externe CPU, also ein externer Prozessor der Teilnehmerprozessor 102 kann über die Teilnehmerschnittstelle, mit dem teilnehmerspezifischen Teil 204 direkt auf die Register des FlexRay-Kommunikationsbaustein zugreifen. Dabei wird eine Vielzahl von Registern verwendet. Diese Register werden eingesetzt, um die FlexRay Protokoll Controller, also die Schnittstellenbausteine 207 und 208 den Botschaftsverwalter (Message Handler MHD) 200, die globale Zeiteinheit (Global Time Unit GTU) 209, den allgemeinen Systemcontroller (System Universal Controller SUC) 210, die Netzwerk- und Fehlermanagementeinheit (Network und Error Management Unit NEM) 211, den Unberbrechungscontroller (Interrupt Controller INT) 212 sowie den Zugriff auf das Message RAM, also den Botschaftsspeicher 300 zu konfigurieren und zu steuern und ebenso den entsprechenden Status anzuzeigen. Zumindest auf Teile dieser Register wird noch in den Figuren 4 bis 6 und 7 bis 9 näher eingegangen. Ein solch beschriebener, erfindungsgemäßer FlexRay-Kommunikationsbaustein ermöglicht die einfache Umsetzung der FlexRaySpezifikation v2.0, wodurch einfach ein ASIC oder ein Mikrocontroller mit entsprechender FlexRay-Funktionalität generiert werden kann.

In Figur 3 ist detailliert die Aufteilung des Botschaftsspeichers 300 beschrieben. Für die nach der FlexRay-Protokollspezifiktaion geforderte Funktionalität eines FlexRay-Kommunikationscontroller wird ein Botschaftsspeicher für das Bereitstellen von zu sendenden Botschaften (Transmit Buffer) sowie das Abspeichern von fehlerfrei empfangenen Botschaften (Receive Buffer) benötigt. Ein FlexRay-Protokoll erlaubt Botschaften mit einem Datenbereich, also einem Payload-Bereich von 0 bis 254 Bytes. Wie in Figur 2 dargestellt ist der Botschaftsspeicher Teil des FlexRay-Kommunikationsbaustein 100. Das nachfolgend beschriebene Verfahren sowie der entsprechende Botschaftsspeicher beschreiben die Speicherung von zu sendenden Botschaften sowie von empfangenen Botschaften, insbesondere unter Verwendung eines Random Access Memory (RAM), wobei es durch den erfindungsgemäßen Mechanismus möglich ist in einem Botschaftsspeicher vorgegebener Größe eine variable Anzahl von Botschaften zu speichern. Dabei ist die Anzahl der speicherbaren Botschaften abhängig von der Größe der Datenbereiche der einzelnen Botschaften, wodurch zum einen die Größe des benötigten Speichers minimiert werden kann ohne die Größe der Datenbereiche der Botschaften einzuschränken und zum anderen eine optimale Ausnutzung des Speichers erfolgt Im Folgenden nun soll diese variable Aufteilung eines insbesondere RAM-basierten Botschaftsspeichers für einen FlexRay Communication Controller näher beschrieben werden.

Zur Implementierung wird nun beispielhaft ein Botschaftsspeicher mit einer festgelegten Wortbreite von n Bit, beispielsweise 8, 16, 32 usw., sowie einer vorgegebenen Speichertiefe von m Worten vorgegeben (m,n als natürliche Zahlen). Dabei wird der Botschaftsspeicher 300 in zwei Segmente aufgeteilt, ein Header Segment oder Kopfsegment HS und ein Datensegment DS (Payload Section, Payload Segment). Pro Botschaft wird somit ein Headerbereich HB und ein Datenbereich DB angelegt. Für Botschaften 0,1 bis k (k als natürliche Zahl) werden somit Headerbereiche oder Kopfbereiche HB0, HB1 bis HBk und Datenbereiche DB0, DB1 bis DBk angelegt. In einer Botschaft wird also zwischen ersten und zweiten Daten unterschieden, wobei die ersten Daten Konfigurationsdaten und/oder Statusdaten bezüglich der FlexRay Botschaft entsprechen und jeweils in einem Headerbereich HB (HB0, HB1, ..., HBk) abgelegt werden. Die zweiten Daten, die den eigentlichen Daten entsprechen, die übertragen werden sollen, werden entsprechend in Datenbereichen DB (DBO, DB1, ... , DBk) abgelegt. Somit entsteht für die ersten Daten pro Botschaft ein erster Datenumfang (in Bit, Byte oder Speicherworten gemessen) und für die zweiten Daten einer Botschaft ein zweiter Datenumfang (ebenfalls in Bit, Byte oder Speicherworten gemessen), wobei der zweite Datenumfang pro Botschaft unterschiedlich sein kann. Die Aufteilung zwischen Kopfsegment HS und Datensegment DS ist nun im Botschaftsspeicher 300 variabel, d. h. es existiert keine vorgegebene Grenze zwischen den Bereichen. Die Aufteilung zwischen Kopfsegment HS und Datensegment DS ist erfindungsgemäß abhängig von der Anzahl k der Botschaften sowie dem zweiten Datenumfang, also dem Umfang der eigentlichen Daten, einer Botschaft bzw. aller k Botschaften zusammen. Erfindungsgemäß wird nun den Konfigurationsdaten KD0, KD1 bis KDk der jeweiligen Botschaft ein Zeigerelement oder Datapointer DP0, DP1 bis DPk jeweils direkt zugeordnet. In der speziellen Ausgestaltung wird jedem Kopfbereich HB0, HB1 bis HBk eine feste Anzahl von Speicherworten, hier zwei, zugeordnet, so dass immer ein Konfigurationsdatum KD (KD0, KD1, ..., KDk) und ein Zeigerelement DP (DPO, DP1, ..., DPk) zusammen in einem Headerbereich HB abgelegt sind. An diesem Kopfsegment HS mit den Headerbereichen HB, dessen Größe bzw. erster Datenumfang abhängig von der Anzahl k der zu speichernden Botschaften ist, schließt das Datensegment DS zur Speicherung der eigentlichen Botschaftsdaten D0, D1 bis Dk an. Dieses Datensegment (oder Datensection) DS hängt in seinem Datenumfang vom jeweiligen Datenumfang der abgelegten Botschaftsdaten ab, hier z.B. in DB0 sechs Worte, DB1 ein Wort und DBk zwei Worte. Die jeweiligen Zeigerelemente DP0, DP1 bis DPk zeigen somit immer zum Beginn, also auf die Anfangsadresse des jeweiligen Datenbereichs DB0, DB1 bis DBk, in denen die Daten D0, D1 bis Dk der jeweiligen Botschaften 0, 1, bis k abgelegt sind. Damit ist die Aufteilung des Botschaftsspeichers zwischen Kopfsegment HS und Datensegment DS variabel und hängt von der Anzahl der Botschaften selbst sowie dem jeweiligen Datenumfang einer Botschaft und damit dem gesamten zweiten Datenumfang ab. Werden weniger Botschaften konfiguriert, wird das Kopfsegment kleiner und der frei werdende Bereich im Botschaftsspeicher kann als Zusatz zum Datensegment DS für die Speicherung von Daten verwendet werden. Durch diese Variabilität kann eine optimale Speicherausnutzung gewährleistet werden, womit auch die Verwendung kleinerer Speicher möglich ist. Das freie Datensegment FDS ,insbesondere dessen Größe, ebenfalls abhängig von der Kombination aus Anzahl k der gespeicherten Botschaften und dem jeweiligen zweiten Datenumfang der Botschaften ist somit minimal und kann sogar 0 werden.

Neben der Verwendung von Zeigerelementen ist es auch möglich, die ersten und zweiten Daten, also die Konfigurationsdaten KD (KDO, KD1, ..., KDk) und die eigentlichen Daten D (D=, D1, ... ,Dk) in einer vorgebbaren Reihenfolge abzulegen, so dass die Reihenfolge der Kopfbereiche HB0 bis HBk im Kopfsegment HS und die Reihenfolge der Datenbereiche DB0 bis DBk im Datensegment DS jeweils identisch ist. Dann könnte unter Umständen sogar auf ein Zeigerelement verzichtet werden.

In einer besonderen Ausgestaltung ist dem Botschaftsspeicher ein Fehlerkennungserzeuger, insbesondere ein Parity-Bit-Generator-Element und ein Fehlerkennungsprüfer, insbesondere ein Parity-Bit-Prüf-Element zugeordnet, um die Korrektheit der gespeicherten Daten in HS und DS zu gewährleisten, indem pro Speicherwort oder pro Bereich (HB und/oder DB) eine Prüfsumme eben insbesondere als Parity-Bit mit abgelegt werden kann. Andere Kontrollkennungen, z.B. ein CRC (Cyclic redundancy check) oder auch Kennungen höherer Mächtigkeit wie ECC ( Error Code Correction) sind denkbar. Damit sind gegenüber einer festgelegten Aufteilung des Botschaftsspeichers folgende Vorteile gegeben:
Der Anwender kann bei der Programmierung entscheiden, ob er eine größere Anzahl von Botschaften mit kleinem Datenfeld oder ob er eine kleinere Anzahl von Botschaften mit großem Datenfeld verwenden möchte. Bei der Konfiguration von Botschaften mit unterschiedlich großem Datenbereich wird der vorhandene Speicherplatz optimal ausgenutzt. Der Anwender hat die Möglichkeit einen Datenspeicherbereich gemeinsam für unterschiedliche Botschaften zu nutzen.

Bei der Implementierung des Communication Controllers auf einer integrierten Schaltung kann die Größe des Botschaftsspeichers durch Anpassung der Speichertiefe des verwendeten Speichers an die Bedürfnisse der Applikation angepasst werden, ohne die sonstigen Funktionen des Communication Controllers zu ändern.

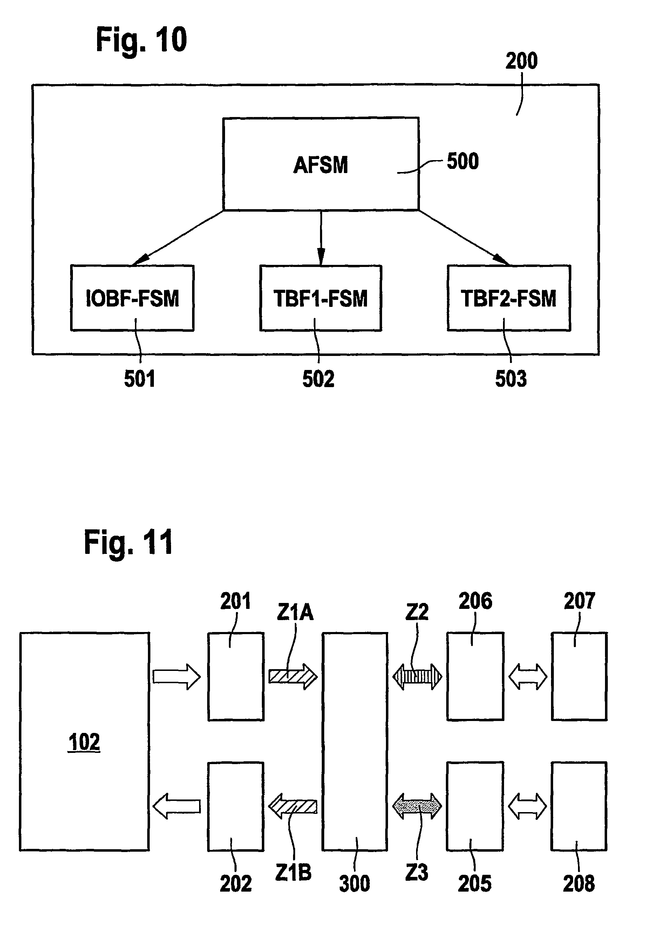

Im Weiteren wird nun anhand der Figuren 4 bis 6 sowie 7 bis 9 der Host-CPU-Zugriff, also Schreiben und Lesen von Konfigurationsdaten bzw. Statusdaten und der eigentlichen Daten über die Pufferspeicheranordnung 201 und 202 näher beschrieben. Dabei ist es das Ziel, eine Entkopplung bezüglich der Datenübertragung derart herzustellen, dass die Datenintegrität sichergestellt werden kann und gleichzeitig eine hohe Übertragungsgeschwindigkeit gewährleistet ist. Die Steuerung dieser Vorgänge erfolgt über den Botschaftsverwalter 200, was später noch näher in den Figuren 10, 11 und 12 beschrieben wird.

In den Figuren 4, 5 und 6 werden zunächst die Schreibzugriffe auf den Botschaftsspeicher 300 durch die Host-CPU der Teilnehmer-CPU 102 über den Eingangspufferspeicher 201 näher erläutert. Dazu zeigt Figur 4 noch einmal den Kommunikationsbaustein 100, wobei aus Gründen der Übersichtlichkeit nur die hier relevanten Teile des Kommunikationsbausteins 100 gezeigt sind. Dies ist zum einen der für die Steuerung der Abläufe verantwortliche Botschaftsverwalter 200 sowie zwei Kontrollregister 403 und 404, die wie dargestellt außerhalb des Botschaftsverwalters 200 im Kommunikationsbaustein 100 untergebracht sein können, aber auch im Botschaftsverwalter 200 selbst enthalten sein können. 403 stellt dabei das Eingangs-Anforderungsregister (Input Buffer Command Request Register) dar und 404 das Eingangs-Maskierungsregister (Input Buffer Command Mask Register). Schreibzugriffe der Host-CPU 102 auf den Botschaftsspeicher 300 (Message RAM) erfolgen also über einen zwischengeschalteten Eingangspufferspeicher 201 (Input Buffer). Dieser Eingangspufferspeicher 201 ist nun geteilt bzw. gedoppelt ausgelegt, und zwar als Teilpufferspeicher 400 und einem zu dem Teilpufferspeicher zugehörigen Schattenspeicher 401. Damit kann wie nachfolgend beschrieben ein kontinuierlicher Zugriff der Host-CPU 102 auf die Botschaften bzw. Botschaftsobjekte respektive Daten des Botschaftsspeichers 300 erfolgen und damit Datenintegrität und beschleunigte Übertragung gewährleistet werden. Die Steuerung der Zugriffe erfolgt über das Eingangs-Anforderungsregister 403 und über das Eingangs-Maskierungsregister 404. Im Register 403 sind mit den Zahlen von 0 bis 31 die jeweiligen Bitstellen in 403 hier beispielhaft für eine Breite von 32 Bit dargestellt. Gleiches gilt für das Register 404 und die Bitstellen 0 bis 31 in 404.

Erfindungsgemäß erhalten nun beispielhaft die Bitstellen 0 bis 5, 15, 16 bis 21 und 31 des Registers 403 bezüglich der Ablaufsteuerung eine besondere Funktion. So ist in die Bitstellen 0 bis 5 des Registers 403 eine Kennung IBRH (Input Buffer Request Host) als Botschaftskennung eintragbar. Ebenso ist in die Bitstellen 16 bis 21 des Registers 403 eine Kennung IBRS (Input Buffer Request Shadow) eintragbar. Ebenso sind in Registerstelle 15 von 403 IBSYH und in Registerstelle 31 von 403 IBSYS als Zugriffskennungen eingetragen. Ausgezeichnet sind auch die Stellen 0 bis 2 des Registers 404, wobei in 0 und 1 mit LHSH (Load Header Section Host) und LDSH (Load Data Section Host) weitere Kennungen als Datenkennungen eingetragen sind. Diese Datenkennungen sind hier in einfachster Form, nämlich jeweils als ein Bit ausgebildet. In Bitstelle 2 von Register 404 ist mit STXRH (Set Transmission X Request Host) eine Startkennung eingeschrieben.
Im Weiteren wird nun der Ablauf des Schreibzugriffs auf den Botschaftsspeicher über den Eingangspuffer beschrieben.

Die Host-CPU 102 schreibt die Daten der zu transferierenden Botschaft in den Eingangspufferspeicher 201. Dabei kann die Host-CPU 102 nur die Konfigurations- und Headerdaten KD einer Botschaft für das Headersegment HS des Botschaftsspeichers oder nur die eigentlichen, zu übertragenden Daten D einer Botschaft für das Datensegment DS des Botschaftsspeichers oder beide schreiben. Welcher Teil einer Botschaft also Konfigurationsdaten und/oder die eigentlichen Daten übertragen werden soll, wird durch die speziellen Datenkennungen LHSH und LDSH im Eingangs-Markierungsregister 404 festgelegt. Dabei wird durch LHSH (Load Header Section Host) festgelegt ob die Headerdaten, also die Konfigurationsdaten KD, übertragen werden und durch LDSH (Load Data Section Host) festgelegt, ob die Daten D übertragen werden sollen. Dadurch, dass der Eingangspufferspeicher 201 zweiteilig mit einem Teil des Pufferspeichers 400 und einem dazugehörigen Schattenspeicher 401 ausgebildet ist und ein wechselseitiger Zugriff erfolgen soll sind als Gegenstück zu LHSH und LDSH zwei weitere Datenkennungsbereiche vorgesehen, die nun auf den Schattenspeicher 401 bezogen sind. Diese Datenkennungen in den Bitstellen 16 und 17 des Registers 404 sind mit LHSS (Load Header Section Shadow) und LDSS (Load Data Section Shadow) bezeichnet. Durch diese wird somit der Übertragungsvorgang bezüglich des Schattenspeichers 401 gesteuert.

Ist nun das Startbit bzw. die Startkennung STXRH (Set Transmission X Request Host) in Bitstelle 2 des Eingangs-Maskierungsregisters 404 gesetzt, so wird nach erfolgtem Transfer der jeweils zu übertragenden Konfigurationsdaten und/oder eigentlichen Daten in den Botschaftsspeicher 300 automatisch eine Sendeanforderung (Transmission Request) für das entsprechende Botschaftsobjekt gesetzt. D. h. durch diese Startkennung STXRH wird das automatische Senden eines übertragenden Botschaftsobjekts gesteuert, insbesondere gestartet.

Das Gegenstück hierzu entsprechend für den Schattenspeicher ist die Startkennung STXRS (Set Transmission X Request Shadow) welches beispielhaft in Bitstelle 18 des Eingangs-Markierungsregisters 404 enthalten ist und auch hier im einfachsten Fall eben als ein Bit ausgebildet ist. Die Funktion von STXRS ist analog der Funktion von STXRH, lediglich bezogen auf den Schattenspeicher 1.

Wenn die Host-CPU 102 die Botschaftskennung, insbesondere die Nummer des Botschaftsobjekts im Botschaftsspeicher 300 in welches die Daten des Eingangspufferspeichers 201 transferiert werden sollen in die Bitstellen 0 bis 5 des Eingangs-Anforderungsregisters 403, also nach IBRH schreibt werden der Teilpufferspeicher 400 des Eingangspufferspeichers 201 und der zugehörige Schattenspeicher 401 vertauscht bzw. es wird der jeweilige Zugriff von Host-CPU 102 und Botschaftsspeicher 300 auf die beiden Teilspeicher 400 und 401 vertauscht, wie durch die halbkreisförmigen Pfeile angedeutet. Dabei wird z.B. auch der Datentransfer, also die Datenübertragung zum Botschaftsspeicher 300 gestartet. Die Datenübertragung zum Botschaftsspeicher 300 selbst erfolgt aus dem Schattenspeicher 401. Gleichzeitig werden die Registerbereiche IBRH und IBRS getauscht. Ebenso getauscht werden LHSH und LDSH gegen LHSS und LDSS. Gleichermaßen getauscht wird STXRH mit STXRS. IBRS zeigt somit die Kennung der Botschaft, also die Nummer des Botschaftsobjektes für das eine Übertragung, also ein Transfer aus dem Schattenspeicher 401 im Gange ist bzw. welches Botschaftsobjekt, also welcher Bereich im Botschaftsspeicher als letztes Daten (KD und/oder D) aus dem Schattenspeicher 401 erhalten hat. Durch die Kennung (hier wieder beispielsweise 1 Bit) IBSYS (Input Buffer Busy Shadow) in Bitstelle 31 des Eingangs-Anforderungsregisters 403 wird angezeigt ob gerade eine Übertragung mit Beteiligung des Schattenspeichers 401 erfolgt. So wird beispielsweise bei IBSYS=1 gerade aus dem Schattenspeicher 401 übertragen und bei IBSYS=0 eben nicht Dieses Bit IBSYS wird beispielsweise durch das Schreiben von IBRH also Bitstellen 0 bis 5 in Register 403 gesetzt, um anzuzeigen, dass ein Transfer zwischen dem Schattenspeicher 401 und dem Botschaftsspeicher 300 im Gange ist. Nach Beendigung dieser Datenübertragung zum Botschaftsspeicher 300 wird IBSYS wieder zurückgesetzt.

Während der Datentransfer aus dem Schattenspeicher 401 gerade läuft kann die Host-CPU 102 die nächste zu transferierende Botschaft in den Eingangspufferspeicher bzw. in den Teilpufferspeicher 400 schreiben. Mit Hilfe einer weiteren Zugriffskennung IBSYH (Input Buffer Busy Host) beispielsweise in Bitstelle 15 von Register 403 kann die Kennung noch weiter verfeinert werden. Schreibt die Host-CPU 102 gerade IBRH, also die Bitstellen 0 bis 5 von Register 403 während eine Übertragung zwischen dem Schattenspeicher 401 und dem Botschaftsspeicher 300 läuft, also IBSYS=1 ist, so wird IBSYH im Eingangs-Anforderungsregister 403 gesetzt. Sobald der laufende Transfer also die laufende Übertragung abgeschlossen ist, wird der angeforderte Transfer (Anforderung durch STXRH siehe oben) gestartet und das Bit IBSYH zurückgesetzt. Das Bit IBSYS bleibt während der ganzen Zeit gesetzt, um anzuzeigen, dass Daten zum Botschaftsspeicher transferiert werden. Alle verwendeten Bits aller Ausführungsbeispiele können dabei auch als Kennungen mit mehr als einem Bit ausgebildet sein. Vorteilhaft ist die Ein-Bit Lösung aus speicher- und verarbeitungsökonomischen Gründen.

Der so beschriebene Mechanismus erlaubt es der Host-CPU 102 kontinuierlich Daten in die im Botschaftsspeicher befindlichen Botschaftsobjekte bestehend aus Headerbereich HB und Datenbereich DB zu transferieren, vorrausgesetzt die Zugriffsgeschwindigkeit der Host-CPU 102 auf den Eingangspufferspeicher ist kleiner oder gleich der internen Datentransferrate des FlexRay-IP-Modul also des Kommunikationsbausteins 100.

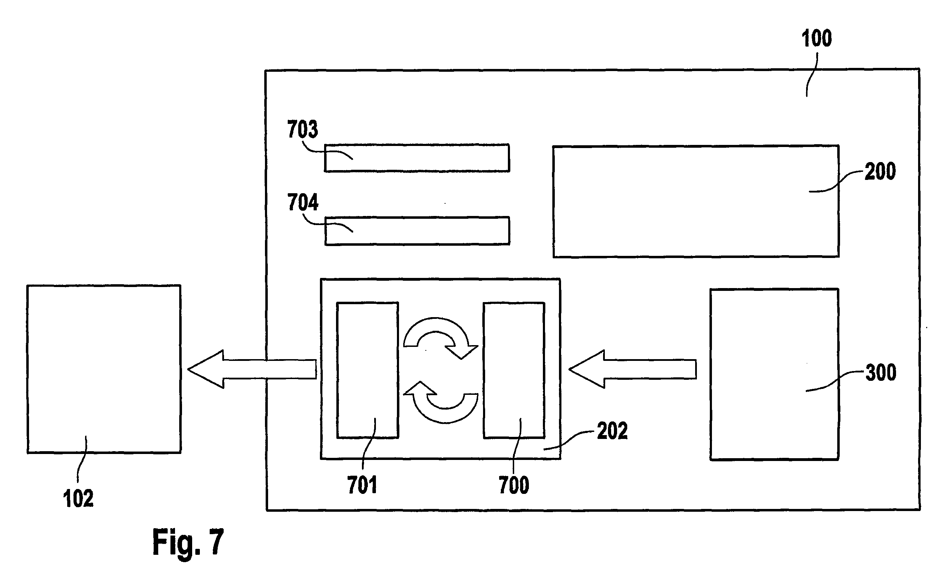

In den Figuren 7, 8 und 9 werden nun die Lesezugriffe auf den Botschaftsspeicher 300 durch die Host-CPU oder Teilnehmer-CPU 102 über den Ausgangspufferspeicher oder Ausgabepufferspeicher 202 näher erläutert. Dazu zeigt Figur 7 noch einmal den Kommunikationsbaustein 100, wobei aus Gründen der Übersichtlichkeit auch hier nur die relevanten Teile des Kommunikationsbausteins 100 gezeigt sind. Dies ist zum einen der für die Steuerung der Abläufe verantwortliche Botschaftsverwalter 200 sowie zwei Kontrollregister 703 und 704, die wie dargestellt außerhalb des Botschaftsverwalter 300 im Kommunikationsbaustein 100 untergebracht sein können, aber auch im Botschaftsverwalter 200 selbst enthalten sein können. 703 stellt dabei das Ausgangs-Anforderungsregister (Output Buffer Command Request Register) dar und 704 das Ausgangs-Maskierungsregister (Output Buffer Command Mask Register). Lesezugriffe der Host-CPU 102 auf den Botschaftsspeicher 300 erfolgen also über den zwischengeschalteten Ausgangspufferspeicher 202 (Output Buffer). Dieser Ausgangspufferspeicher 202 ist nun ebenfalls geteilt bzw. gedoppelt ausgelegt, und zwar als Teilpufferspeicher 701 und einem zu dem Teilpufferspeicher zugehörigen Schattenspeicher 700. Damit kann auch hier wie nachfolgend beschrieben ein kontinuierlicher Zugriff der Host-CPU 102 auf die Botschaften bzw. Botschaftsobjekte respektive Daten des Botschaftsspeichers 300 erfolgen und damit Datenintegrität und beschleunigte Übertragung nun in der Gegenrichtung vom Botschaftsspeicher zum Host gewährleistet werden. Die Steuerung der Zugriffe erfolgt über das Ausgangs-Anforderungsregister 703 und über das Eingangs-Maskierungsregister 704. Auch im Register 703 sind mit den Zahlen von 0 bis 31 die jeweiligen Bitstellen in 703 hier beispielhaft für eine Breite von 32 Bit dargestellt. Gleiches gilt für das Register 704 und die Bitstellen 0 bis 31 in 704.

Erfindungsgemäß erhalten nun beispielhaft die Bitstellen 0 bis 5, 8 und 9, 15 und 16 bis 21 des Registers 703 bezüglich der Ablaufsteuerung des Lesezugriffs eine besondere Funktion. So ist in die Bitstellen 0 bis 5 des Registers 703 eine Kennung OBRS (Output Buffer Request Shadow) als Botschaftskennung eintragbar. Ebenso ist in die Bitstellen 16 bis 21 des Registers 703 eine Kennung OBRH (Output Buffer Request Host) eintragbar. Als Zugriffskennung ist in Bitstelle 15 von Register 703 eine Kennung OBSYS (Output Buffer Busy Shadow) eintragbar. Ausgezeichnet sind auch die Stellen 0 und 1 des Ausgabe-Maskierungsregisters 704, wobei in den Bitstellen 0 und 1 mit RDSS (Read Data Section Shadow) und RHSS (Read Header Section Shadow) weitere Kennungen als Datenkennungen eingetragen sind. Weitere Datenkennungen sind beispielsweise in den Bitstellen 16 und 17 mit RDSH (Read Data Section Host) und RHSH (Read Header Section Host) vorgesehen. Diese Datenkennungen sind auch hier beispielhaft in einfachster Form, nämlich jeweils als ein Bit ausgebildet. In Bitstelle 9 des Registers 703 ist eine Startkennung REQ eingetragen. Weiterhin ist eine Umschaltkennung VIEW vorgesehen die beispielhaft in Bitstelle 8 von Register 703 eingetragen ist

Die Host-CPU 102 fordert die Daten eines Botschaftsobjekts aus dem Botschaftsspeicher 300 an, indem sie die Kennung der gewünschten Botschaft, also insbesondere die Nummer des gewünschten Botschaftsobjektes, nach OBRS also in die Bitstellen 0 bis 5 des Registers 703 schreibt. Auch hierbei kann die Host-CPU wie in der Gegenrichtung entweder nur die Status- bzw. Konfigurations- und Headerdaten KD einer Botschaft also aus einem Headerbereich oder nur die eigentlich zu übertragenden Daten D einer Botschaft also aus dem Datenbereich oder auch beide lesen. Welcher Teil der Daten also aus Headerbereich und/oder Datenbereich übertragen werden soll wird hierbei vergleichbar mit der Gegenrichtung durch RHSS und RDSS festgelegt. Das heißt RHSS gibt an, ob die Headerdaten gelesen werden sollen und RDSS gibt an, ob die eigentlichen Daten gelesen werden sollen.

Eine Startkennung dient dazu die Übertragung vom Botschaflsspeicher zum Schattenspeicher 700 zu starten. D.h. wird als Kennung wie im einfachsten Fall ein Bit verwendet, wird durch Setzen von Bit REQ in Bitstelle 9 im Ausgabe-Anforderungsregister 703 die Übertragung vom Botschaftsspeicher 300 zum Schattenspeicher 700 gestartet. Die laufende Übertragung wird wieder durch eine Zugriffskennung, hier wieder im einfachsten Fall durch ein Bit OBSYS im Register 703 angezeigt. Um Kollisionen zu vermeiden ist es vorteilhaft, wenn das Bit REQ nur dann gesetzt werden kann, wenn OBSYS nicht gesetzt ist also gerade keine laufende Übertragung erfolgt. Hier erfolgt dann auch der Botschaftstransfer zwischen dem Botschaftsspeicher 300 und dem Schattenspeicher 700. Der eigentliche Ablauf könnte nun einerseits vergleichbar zur Gegenrichtung wie unter den Figuren 4, 5 und 6 beschrieben gesteuert werden (komplementäre Registerbelegung) und erfolgen oder aber in einer Variation durch eine zusätzliche Kennung, nämlich eine Umschaltkennung VIEW in Bitstelle 8 des Registers 703. D.h. nach Abschluss der Übertragung wird das Bit OBSYS zurückgesetzt und durch Setzen des Bits VIEW im Ausgabe-Anforderungsregister 703 werden der Teilpufferspeicher 701 und der zugehörige Schattenspeicher 700 getauscht bzw. es werden die Zugriffe darauf getauscht und die Host-CPU 102 kann nun das vom Botschaftsspeicher angeforderte Botschaftsobjekt also die entsprechende Botschaft aus dem Teilpufferspeicher 701 auslesen. Dabei werden auch hier vergleichbar mit der Gegenübertragungsrichtung in den Figuren 4 bist 6 die Registerzellen OBRS und OBRH getauscht. Gleichermaßen werden RHSS und RDSS gegen RHSH und RDSH getauscht. Als Schutzmechanismus kann auch hier vorgesehen werden, dass das Bit VIEW nur dann gesetzt werden kann, wenn OBSYS nicht gesetzt ist, also keine laufende Übertragung stattfindet.

Somit erfolgen Lesezugriffe der Host-CPU 102 auf den Botschaftsspeicher 300 über einen zwischengeschalteten Ausgangspufferspeicher 202. Dieser Ausgangspufferspeicher ist ebenso wie der Eingangspufferspeicher doppelt bzw. zweiteilig ausgelegt um einen kontinuierlichen Zugriff der Host-CPU 102 auf die Botschaftsobjekte die im Botschaftsspeicher 300 abgelegt sind zu gewährleisten. Auch hier werden die Vorteile der hohen Datenintegrität und der beschleunigten Übertragung erzielt.

Durch die Verwendung der beschriebenen Eingangs- und Ausgangspuffer wird sichergestellt, dass eine Host-CPU trotz der modulinternen Latenzzeiten unterbrechungsfrei auf den Botschaftsspeicher zugreifen kann.

Zur Sicherstellung dieser Datenintegrität wird die Datenübertragung, insbesondere die Weiterleitung im Kommunikationsbaustein 100 durch den Botschaftsverwalter 200 (Message Handler MHD) vorgenommen. Dazu ist in Figur 10 der Botschaflsverwalter 200 dargestellt. Der Botschaftsverwalter ist in seiner Funktionalität durch mehrere Zustandsmaschinen oder Zustandsautomaten, also endliche Automaten, sogenannte Finite-State-Maschinen (FSM) darstellbar. Dabei sind wenigstens drei Zustandsmaschinen und in einer besonderen Ausführungsform vier Finite-State-Maschinen vorgesehen. Eine erste Finit-State-Maschine ist die IOBF-FSM und mit 501 bezeichnet (Input/Output Buffer State Machine). Diese IOBF-FSM könnte auch je Übertragungsrichtung bezüglich des Eingangspufferspeichers oder des Ausgangspufferspeichers in zwei Finite-State-Maschinen aufgeteilt sein IBF-FSM (Input Buffer FSM) und OBF-FSM (Output Buffer FSM), womit maximal fünf Zustandsautomaten (IBF-FSM, OBF-FSM, TBF1-FSM, TBF2-FSM, AFSM) denkbar wären. Bevorzugt ist aber eine gemeinsame IOBF-FSM vorzusehen. Eine wenigstens zweite Finite-State-Maschine ist hier im Zuge des bevorzugten Ausführungsbeispiels in zwei Blöcke 502 und 503 aufgeteilt und bedient die beiden Kanäle A und B bezüglich der Speicher 205 und 206, wie zu Fig. 2 beschrieben. Dabei kann eine Finite-State-Maschine vorgesehen sein um beide Kanäle A und B zu bedienen oder aber wie in der bevorzugten Form eine Finit-State-Maschine TBF1-FSM mit 502 bezeichnet (Transient Buffer 1 (206, RAM A) State Machine) für Kanal A und für Kanal B eine TBF2-FSM mit 503 bezeichnet (Transient Buffer 2 (205, RAM B) State Machine).

Zur Steuerung des Zugriffs der drei Finite-State-Maschinen 501-503 im bevorzugten Ausführungsbeispiel dient eine Arbiter-Finite-State-Maschine, die sogenannte AFSM, die mit 500 bezeichnet ist. Die Daten (KD und/oder D) werden in einem durch ein Taktmittel, wie z.B. ein VCO (Voltage controlled oszillator), einen Schwingquarz usw. generierten oder aus diesem angepassten Takt im Kommunikationsbaustein übertragen. Der Takt T kann dabei im Baustein genereirt werden oder von außen, z.B. als Bustakt vorgegeben sein. Diese Arbiter-Finite-State-Maschine AFSM 500 gibt abwechselnd einer der drei Finit-State-Maschinen 501-503, insbesondere jeweils für eine Taktperiode T Zugriff auf den Botschaftsspeicher. D.h. die zur Verfügung stehende Zeit wird entsprechend den Zugriffsanforderungen der einzelnen Zustandsautomaten 501, 502, 503 auf diese anfordernden Zustandsautomaten aufgeteilt. Erfolgt eine Zugriffsanforderung von nur einer Finite-State-Machine, so erhält diese 100% der Zugriffszeit, also alle Takte T. Erfolgt eine Zugriffsanforderung von zwei Zustandsautomaten, erhält jede Finite-State-Machine 50% der Zugriffszeit. Erfolgt schließlich eine Zugriffsanforderung von drei Zustandsautomaten so erhält jede der Finite-State-Maschinen 1/3 der Zugriffszeit. Dadurch wird die jeweils zur Verfügung stehende Bandbreite optimal genutzt.

Die erste Finite-State-Machine mit 501 bezeichnet, also IOBF-FSM führt bei Bedarf folgende Aktionen aus:
- Datentransfer vom Eingangspufferspeicher 201 zum ausgewählten Botschaftsobjekt im Botschaftsspeicher 300.
- Datentransfer vom ausgewählten Botschaftsobjekt im Botschaftsspeicher 300 zum Ausgangspufferspeicher 202.

Die Zustandsmaschine für Kanal A 502, also TBF1FSM, führt folgende Aktionen aus:
- Datentransfer vom ausgewählten Botschaftsobjekt im Botschaftsspeicher 300 zum Pufferspeicher 206 von Kanal A.
- Datentransfer vom Pufferspeicher 206 zum ausgewählten Botschaftsobjekt im Botschaftsspeicher 300.
- Suche nach dem passenden Botschaftsobjekt im Botschaftsspeicher, wobei bei Empfang das Botschaftsobjekt (Receive Buffer) zum Abspeichern einer auf Kanal A empfangenen Botschaft im Rahmen einer Akzeptanzfilterung gesucht wird und beim Senden das nächste auf Kanal A zu sendende Botschaftsobjekt (Transmit Buffer).

Analog dazu ist die Aktion von TBF2-FSM, also der Finit-State-Machine für Kanal B in Block 503. Diese führt den Datentransfer vom ausgewählten Botschaftsobjekt im Botschaftsspeicher 300 zum Pufferspeicher 205 von Kanal B aus und den Datentransfer vom Pufferspeicher 205 zum ausgewählten Botschaftsobjekt im Botschaftsspeicher 300. Auch die Suchfunktion ist analog zu TBF1-FSM nach einem passenden Botschaftsobjekt im Botschaftsspeicher, wobei bei Empfang das Botschaftsobjekt (Receive Buffer) zum Abspeichern einer auf Kanal B empfangenen Botschaft im Rahmen einer Akzeptanzfilterung gesucht wird und beim Senden die nächste auf Kanal B zu sendende Botschaft oder Botschaftsobjekt (Transmit Buffer).

In Figur 11 sind nun noch einmal die Abläufe und die Übertragungswege dargestellt. Die drei Zustandsmaschinen 501-503 steuern die jeweiligen Datenübertragungen zwischen den einzelnen Teilen. Dabei ist mit 102 wieder die Host-CPU dargestellt, mit 201 der Eingangspufferspeicher und mit 202 der Ausgangspufferspeicher. Mit 300 ist der Botschaftsspeicher dargestellt und die beiden Pufferspeicher für Kanal A und Kanal B mit 206 und 205. Die Schnittstellenelemente 207 und 208 sind ebenfalls dargestellt. Der erste Zustandsautomat IOBF-FSM, mit 501 bezeichnet steuert den Datentransfer Z1A und Z1B, also vom Eingangspufferspeicher 201 zum Botschaftsspeicher 300 und vom Botschaftsspeicher 300 zum Ausgangspufferspeicher 202. Die Datenübertragung erfolgt dabei über Datenbusse mit einer Wortbreite von beispielsweise 32 Bit wobei auch jede andere Bitzahl möglich ist. Gleiches gilt für die Übertragung Z2 zwischen dem Botschaftsspeicher und dem Pufferspeicher 206. Diese Datenübertragung wird durch TBF1-FSM, also 502 die Zustandsmaschine für Kanal A, gesteuert. Die Übertragung Z3 zwischen Botschaftsspeicher 300 und Pufferspeicher 205 wird durch den Zustandsautomaten TBF2-FSM, also 503 gesteuert. Auch hier erfolgt der Datentransfer über Datenbusse mit einer beispielhaften Wordbreite von 32 Bit, wobei auch hier jede andere Bitzahl möglich ist. Normalerweise benötigt der Transfer eines kompletten Botschaftsobjektes über die genannten Übertragungswege mehrere Taktperioden T. Daher erfolgt eine Aufteilung der Übertragungszeit bezogen auf die Taktperioden T durch den Arbiter, also die AFSM 500. In Figur 11 sind also die Datenpfade zwischen denen vom Message Handler kontrollierten Speicherkomponenten dargestellt. Um die Datenintegrität der im Botschaftsspeicher gespeicherten Botschaftsobjekte sicherzustellen, sollten vorteilhafterweise zur gleichen Zeit nur auf einem der dargestellten Pfade also Z1A und Z1B sowie Z2 und Z3 gleichzeitig Daten ausgetauscht werden.

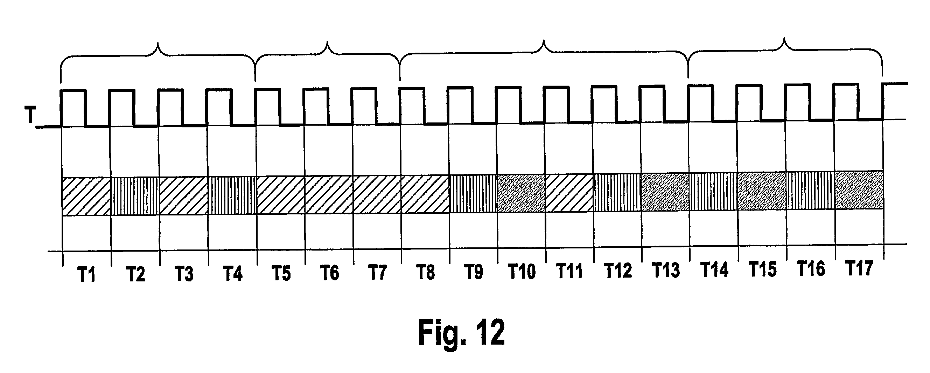

In Abbildung 12 ist an einem Beispiel gezeigt, wie die zur Verfügung stehenden Systemtakte T vom Arbiter, also der AFSM 500, auf die drei anfordernden Zustandsautomaten aufgeteilt werden. In Phase 1 erfolgen Zugriffsanforderungen von Zustandsautomat 501 und Zustandsautomat 502, d.h., dass die gesamte Zeit jeweils zur Hälfte auf die beiden anfordernden Zustandautomaben aufgeteilt wird. Bezogen auf die Taktperioden in Phase 1 bedeutet dies, dass Zustandsautomat 501 in den Taktperioden T1 und T3 Zugriff erhält und Zustandsautomat 502 in den Taktperioden T2 und T4. In Phase 2 erfolgt der Zugriff nur durch die Zustandsmaschine 501, sodass alle drei Taktperioden, also 100% der Zugriffszeit von T5 bis T7 auf IOBF-FSM entfällt. In Phase 3 erfolgen Zugriffsanforderungen aller drei Zustandsautomaten 501 bis 503, sodass eine Drittelung der Gesamtzugriffszeit erfolgt. Der Arbiter AFSM verteilt dann die Zugriffszeit beispielsweise so, dass in den Taktperioden T8 und T11 die Finit-State-Maschine 501, in den Taktperioden T9 und T12 die Finite-State-Maschine 502 und in den Taktperioden T10 und T13 die Finit-State-Maschine 503 Zugriff erhält In Phase 4 schließlich erfolgt der Zugriff durch zwei Zustandsautomaten, 502 und 503 auf den beiden Kanälen A und B des Kommunikationsbausteins, sodass eine Zugriffsverteilung der Taktperioden T14 und T16 an Finite-State-Machine 502 und in T15 und T17 an Finite-State-Machine 503 erfolgt.

Der Arbiterzustandsautomat AFSM 500 sorgt also dafür, dass für den Fall wenn mehr als eine der drei Zustandsmaschinen eine Anforderung für einen Zugriff auf den Botschaftsspeicher 300 stellt, der Zugriff taktweise und abwechselnd auf die anfordernden Zustandsmaschinen aufgeteilt wird. Diese Vorgehensweise stellt die Integrität der im Botschaftsspeicher abgelegten Botschaftsobjekte, also die Datenintegrität, sicher. Will zum Beispiel die Host-CPU 102 über den Ausgangspufferspeicher 202 ein Botschaftsobjekt auslesen während gerade eine empfangene Botschaft in dieses Botschaftsobjekt geschrieben wird, so wird abhängig davon welche Anforderung zuerst gestartet wurde entweder der alte Stand oder der neue Stand ausgelesen, ohne das die Zugriffe im Botschaftsobjekt im Botschaftsspeicher selbst kollidieren.

Das beschriebene Verfahren ermöglicht der Host-CPU im laufenden Betrieb jedes beliebige Botschaflsobjekt im Botschaftsspeicher zu lesen oder zu schreiben, ohne dass das ausgewählte Botschaftsobjekt für die Dauer des Zugriffs der Host-CPU von der Teilnahme am Datenaustausch auf beiden Kanälen des FlexRay Busses gesperrt wäre (Buffer Locking). Gleichzeitig wird durch die taktweise Verschachtelung der Zugriffe die Integrität der im Botschaftsspeicher abgelegten Daten sichergestellt und die Übertragungsgeschwindigkeit, auch durch Ausnutzung der vollen Bandbreite erhöht

## Patentansprüche

1. Verfahren für den Zugriff auf Daten eines Botschaftsspeichers (300), wobei ein erster Pufferspeicher (201, 202) vorgesehen ist,
**dadurch gekennzeichnet, dass**
der erste Pufferspeicher in einen Teilpufferspeicher (400, 701) und einen Schattenspeicher (401, 700) für den Teilpufferspeicher aufgeteilt ist, wobei bei einem Zugriff auf die Daten folgende Schritte ausgeführt werden:
- Eingeben von Daten in den Teilpufferspeicher, und
- Vertauschen des Zugriffs auf Teilpufferspeicher und Schattenspeicher, so dass
- nachfolgende Daten in den Schattenspeicher eingegeben werden können, während die eingegebenen Daten bereits aus dem Teilpufferspeicher ausgegeben werden.

2. Verfahren nach Anspruch 1, **dadurch gekennzeichnet, dass** der Botschaftsspeicher Teil eines Kommunikationsbausteins (100) ist, wobei Daten in oder aus dem Botschaftsspeicher (300) eingegeben oder ausgegeben werden, wobei der Botschaftsspeicher (300) mit einer Pufferspeicheranordnung (201 und 202) verbunden ist und die Daten in einer ersten Übertragungsrichtung zum Botschaftsspeicher und in einer zweiten Übertragungsrichtung vom Botschaftsspeicher übertragen werden, wobei der erste Pufferspeicher und ein zweiter Pufferspeicher vorgesehen sind, wobei die Pufferspeicheranordnung in der ersten Übertragungsrichtung den ersten Pufferspeicher als einen Eingabepufferspeicher (201) aufweist und in der zweiten Übertragungsrichtung den zweiten Pufferspeicher als einen Ausgabepufferspeicher (202) und dass der Eingabepufferspeicher und der Ausgabepufferspeicher jeweils in einen Teilpufferspeicher (400, 701) und einen Schattenspeicher (401, 700) für den Teilpufferspeicher aufgeteilt ist, wobei in jeder Übertragungsrichtung folgende Schritte ausgeführt werden:
- Eingeben von Daten in den jeweiligen Teilpufferspeicher, und
- Vertauschen des Zugriffs auf Teilpufferspeicher und Schattenspeicher, so dass
- nachfolgende Daten in den Schattenspeicher eingegeben werden können, während die eingegebenen Daten bereits aus dem Teilpufferspeicher in der vorgesehenen Übertragungsrichtung ausgegeben werden.

3. Verfahren nach Anspruch 2, **dadurch gekennzeichnet, dass** das Vertauschen des Zugriffs auf Teilpufferspeicher und Schattenspeicher durch eine Kennung angezeigt wird.

4. Verfahren nach Anspruch 2, **dadurch gekennzeichnet, dass** das Vertauschen des Zugriffs auf Teilpufferspeicher und Schattenspeicher durch eine Kennung ausgelöst wird.

5. Verfahren nach Anspruch 2, **dadurch gekennzeichnet, dass** die Daten in Botschaften übertragen werden und die Botschaften mit einer Botschaftskennung (IBRH, IBRS, OBRH, OBRS) versehen sind, wobei das Vertauschen des Zugriffs auf Teilpufferspeicher und Schattenspeicher dann erfolgt, wenn die Botschaftskennung in ein vorgebbares Register (403, 404, 703, 704) eingeschrieben wird.

6. Verfahren nach Anspruch 2, **dadurch gekennzeichnet, dass** die Daten in Botschaften übertragen werden und die Daten in einer Botschaft wenigstens in erste Daten (KD) und zweite Daten (D) aufgeteilt sind, wobei abhängig von wenigstens einer Datenkennung (LHSH, LDSH, LDSS, LHSS, RHSS, RDSS, RDSH, RHSH) nur die ersten Daten (KD) oder nur die zweiten Daten (D) oder erste und zweite Daten übertragen werden.

7. Verfahren nach Anspruch 2, **dadurch gekennzeichnet, dass** der Zugriff auf die Daten durch eine Zugriffskennung (IBSYS, IBSYH, OBSYS), welche in einem Register eingetragen wird, angezeigt wird.

8. Verfahren nach Anspruch 5, **dadurch gekennzeichnet, dass** aus der Zugriffskennung (IBSYS, IBSYH, OBSYS) selbst oder aus ihrer Position in dem Register eine Information ermittelbar ist auf welchen Teilpufferspeicher oder welchen Schattenspeicher gerade zugegriffen wird.

9. Verfahren nach Anspruch 5 oder 6, **dadurch gekennzeichnet, dass** bei vertauschen des Zugriffs auch wenigstens teilweise Registereinträge, insbesondere Kennungen, in dem Register vertauscht werden.

10. Verfahren nach Anspruch 2, **dadurch gekennzeichnet, dass** das Vertauschen des Zugriffs auf Teilpufferspeicher und Schattenspeicher durch eine Umschaltkennung (VIEW) ausgelöst wird.

11. Verfahren nach Anspruch 2, **dadurch gekennzeichnet, dass** für wenigstens eine Übertragungsrichtung eine Startkennung (STXRH, REQ) in einem Register eingetragen wird, wenn die Daten in einen Speicher geschrieben werden sollen.

12. Pufferspeicheranordnung für den Zugriff auf Daten eines Botschaftsspeichers (300) eines Kommunikationsbausteins (100), **dadurch gekennzeichnet, dass** ein erster Pufferspeicher (201, 202) einen Teilpufferspeicher (400, 701) und einen Schattenspeicher (401, 700) des Teilpufferspeichers enthält, wobei Mittel vorgesehen sind, durch welche der Zugriff auf den Teilpufferspeicher (400, 701) und den Schattenspeicher (401, 700) vertauscht wird.

13. Pufferspeicheranordnung nach Anspruch 12, **dadurch gekennzeichnet, dass** die Pufferspeicheranordnung den ersten Pufferspeicher und einen zweiten Pufferspeicher aufweist und dass die Pufferspeicheranordnung in einen Eingangspufferspeicher (201) und einen Ausgangspufferspeicher (202) aufgeteilt ist und der Eingangspufferspeicher (201) einen ersten Teilpufferspeicher (400) und einen ersten Schattenspeicher (401) des Teilpufferspeichers enthält und der Ausgangspufferspeicher (202) einen zweiten Teilpufferspeicher (701) und einen zweiten Schattenspeicher (700) enthält, wobei erste Mittel vorgesehen sind, durch welche der Zugriff auf den ersten Teilpufferspeicher (400) und den ersten Schattenspeicher (401) vertauscht wird und zweite Mittel vorgesehen sind, durch welche der Zugriff auf den zweiten Teilpufferspeicher (701) und den zweiten Schattenspeicher (700) vertauscht wird.

14. Kommunikationsbaustein mit einer Pufferspeicheranordnung nach Anspruch 12.

15. Kommunikationsbaustein mit einer Pufferspeicheranordnung nach Anspruch 13.

## Claims

1. Method for accessing data of a message memory (300), whereby a first buffer memory (201, 202) is provided,
**characterized in that**
the first buffer memory is divided up into a buffer sub-memory (400, 701) and a shadow memory (401, 700) for the buffer sub-memory, whereby the following steps are carried out when the data are accessed:
- input of data into the buffer sub-memory, and
- switchover of the access to the buffer sub-memory and the shadow memory so that
- subsequent data can be input into the shadow memory, whereas the input data are already output from the buffer sub-memory.

2. Method according to Claim 1, **characterized in that** the message memory forms part of a communications module (100), whereby data are input or output into or from the message memory (300), whereby the message memory (300) is connected to a buffer memory arrangement (201 and 202), and the data are transmitted in a first transmission device to the message memory and in a second transmission device from the message memory, whereby the first buffer memory and a second buffer memory are provided, whereby the buffer memory arrangement in the first transmission device has the first buffer memory as an input buffer memory (201) and, in the second transmission device, has the second buffer memory as an output buffer memory (202) and that the input buffer memory and the output buffer memory are divided up in each case into a buffer sub-memory (400, 701) and a shadow memory (401, 700) for the buffer sub-memory, whereby the following steps are carried out in each transmission device:
- input of data into the respective buffer sub-memory, and
- switchover of the access to the buffer sub-memory and the shadow memory, so that
- subsequent data can be input into the shadow memory, whereas the input data are already output from the buffer sub-memory in the transmission device provided.

3. Method according to Claim 2, **characterized in that** the switchover of the access to the buffer sub-memory and the shadow memory is indicated by an identifier.

4. Method according to Claim 2, **characterized in that** the switchover of the access to the buffer sub-memory and the shadow memory is initiated by an identifier.

5. Method according to Claim 2, **characterized in that** the data are transmitted in messages and the messages are provided with a message identifier (IBRH, IBRS, OBRH, OBRS), whereby the access to the buffer sub-memory and the shadow memory is switched over if the message identifier is recorded in a predefinable register (403, 404, 703, 704).

6. Method according to Claim 2, **characterized in that** the data are transmitted in messages and the data in a message are divided up into at least first data (KD) and second data (D), whereby, depending on at least one data identifier (LHSH, LDSH, LDSS, LHSS, RHSS, RDSS, RDSH, RHSH), only the first data (KD) or only the second data (D) or the first and second data are transmitted.

7. Method according to Claim 2, **characterized in that** the access to the data is indicated by an access identifier (IBSYS, IBSYH, OBSYS), which is recorded in a register.

8. Method according to Claim 5, **characterized in that** information can be determined from the access identifier (IBSYS, IBSYH, OBSYS) itself or from its position in the register, indicating the buffer sub-memory or the shadow memory which is currently being accessed.

9. Method according to Claim 5 or 6, **characterized in that,** when the access is switched over, register entries, in particular identifiers, are also at least partially switched over in the register.

10. Method according to Claim 2, **characterized in that** the switchover of the access to the buffer sub-memory and the shadow memory is initiated by a switchover identifier (VIEW).

11. Method according to Claim 2, **characterized in that,** for at least one transmission device, a start identifier (STXRH, REQ) is recorded in a register if the data are intended to be written to a memory.

12. Buffer memory arrangement for accessing data of a message memory (300) of a communications module (100), **characterized in that** a first buffer memory (201, 202) contains a buffer sub-memory (400, 701) and a shadow memory (401, 700) of the buffer sub-memory, whereby means are provided by which the access to the buffer sub-memory (400, 701) and the shadow memory (401, 700) is switched over.

13. Buffer memory arrangement according to Claim 12, **characterized in that** the buffer memory arrangement has the first buffer memory and a second buffer memory, and that the buffer memory arrangement is divided up into an input buffer memory (201) and an output buffer memory (202), and the input buffer memory (201) contains a first buffer sub-memory (400) and a first shadow memory (401) of the buffer sub-memory, and the output buffer memory (202) contains a second buffer sub-memory (701) and a second shadow memory (700), whereby first means are provided by which the access to the first buffer sub-memory (400) and the first shadow memory (401) are switched over, and second means are provided by which the access to the second buffer sub-memory (701) and the second shadow memory (700) is switched over.

14. Communications module with a buffer memory arrangement according to Claim 12.

15. Communications module with a buffer memory arrangement according to Claim 13.

## Revendications

1. Procédé d'accès aux données d'une mémoire à messages (300), une première mémoire tampon (201, 202) étant prévue,
**caractérisé en ce que**
la première mémoire tampon est divisée en une mémoire tampon partielle (400, 701) et une mémoire miroir (401, 700) de la mémoire tampon partielle, les étapes suivantes étant exécutées lors de l'accès aux données :
- introduction de données dans la mémoire tampon partielle et
- échange entre l'accès à la mémoire tampon partielle et l'accès à la mémoire miroir de telle sorte que
- des données suivantes puissent être introduites dans la mémoire miroir pendant que les données introduites ont déjà été extraites de la mémoire tampon partielle.

2. Procédé selon la revendication 1, **caractérisé en ce que** la mémoire à messages fait partie d'un module de communication (100),
des données étant introduites dans la mémoire à messages (300) ou en étant extraites,
la mémoire à messages (300) étant reliée à un système de mémoires tampons (201 et 202) et les données étant transférées dans une première direction de transfert vers la mémoire à messages et dans une seconde direction de transfert hors de la mémoire à messages,
la première mémoire tampon et une deuxième mémoire tampon étant prévue,
le système de mémoires tampons présentant dans la première direction de transfert la première mémoire tampon comme mémoire tampon d'introduction (201) et dans la deuxième direction de transfert la deuxième mémoire tampon comme mémoire tampon de sortie (202),
la mémoire tampon d'entrée et la mémoire tampon de sortie étant toutes deux divisées en une mémoire tampon partielle (400, 701) et une mémoire miroir (401, 700) de la mémoire tampon partielle, les étapes suivantes étant exécutées dans chaque direction de transfert :
- introduction de données dans la mémoire tampon partielle concernée et
- échange entre l'accès à la mémoire tampon partielle et l'accès à la mémoire miroir de telle sorte que
- des données suivantes puissent être introduites dans la mémoire miroir pendant que les données introduites ont déjà été extraites de la mémoire tampon partielle dans la direction de transfert prévue.

3. Procédé selon la revendication 2, **caractérisé en ce que** l'échange entre l'accès à la mémoire tampon partielle et l'accès à la mémoire miroir est affiché par une caractérisation.

4. Procédé selon la revendication 2, **caractérisé en ce que** l'échange entre l'accès à la mémoire tampon partielle et l'accès à la mémoire miroir est déclenché par une caractérisation.

5. Procédé selon la revendication 2, **caractérisé en ce que** les données présentes dans les messages sont transférées et les messages sont dotés d'une caractérisation de message (IBRH, IBRS, OBRH, OBRS), l'échange entre l'accès à la mémoire tampon partielle et l'accès à la mémoire miroir s'effectuant lorsque la caractérisation du message a été inscrite dans un registre prédéterminé (403, 404, 703, 704).

6. Procédé selon la revendication 2, **caractérisé en ce que** les données des messages sont transférées et les données d'un message sont réparties en au moins des premières données (KD) et des deuxièmes données (D), tandis qu'en fonction d'au moins une caractérisation de données (LHSH, LDSH, LDSS, LHSS, RHSS, RDSS, RDSH, RHSH) seules les premières données (KD), seules les deuxièmes données (D) ou les premières et les deuxièmes données sont transférées.

7. Procédé selon la revendication 2, **caractérisé en ce que** l'accès aux données est affiché par une caractérisation d'accès (IBSYS, IBSYH, OBSYS) qui est transcrite dans un registre.

8. Procédé selon la revendication 5, **caractérisé en ce qu'**une information concernant la mémoire tampon partielle ou la mémoire miroir est accédée peut être déterminée à partir de la caractérisation d'accès (IBSYS, IBSYH, OBSYS) proprement dite ou de sa position dans le registre.

9. Procédé selon les revendications 5 ou 6, **caractérisé en ce que** lors de l'échange entre les accès, au moins certaines introductions dans le registre et en particulier les caractérisations sont échangées dans le registre.

10. Procédé selon la revendication 2, **caractérisé en ce que** l'échange entre l'accès à la mémoire tampon partielle et l'accès à la mémoire miroir est déclenché par une caractérisation de basculement (VIEW).

11. Procédé selon la revendication 2, **caractérisé en ce que** pour au moins une direction de transfert, une caractérisation de démarrage (STXRH, REQ) est introduite dans un registre lorsque les données doivent être transcrites dans une mémoire.

12. Système de mémoires tampons destiné à l'accès aux données d'une mémoire de messages (300) d'un module de communication (100), **caractérisé en ce qu'**une première mémoire tampon (201, 202) contient une mémoire tampon partielle (400, 701) et une mémoire miroir (401, 700) de la mémoire tampon partielle, des moyens étant prévus échanger entre l'accès à la mémoire tampon partielle (400, 701) et l'accès à la mémoire miroir (401, 700).

13. Système de mémoires tampons selon la revendication 12, **caractérisé en ce que** le système de miroir tampon présente la première mémoire tampon et une deuxième mémoire tampon et **en ce que** le système de mémoires tampons est divisé en une mémoire tampon d'entrée (201) et une mémoire tampon de sortie (202), la mémoire tampon d'entrée (201) contenant une première mémoire tampon partielle (400) et une première mémoire miroir (401) de la mémoire tampon partielle et le tampon de mémoire de sortie (202) présentant une deuxième mémoire tampon partielle (701) et une deuxième mémoire miroir (700), des premiers moyens étant prévus pour échanger l'accès à la première mémoire tampon partielle (400) et l'accès à la première mémoire miroir (401) et des deuxièmes moyens étant prévus pour échanger l'accès à la deuxième mémoire tampon partielle (701) et l'accès à la deuxième mémoire miroir (700).

14. Module de communication doté d'un système de mémoires tampons selon la revendication 12.

15. Module de communication présentant un système de mémoires partielles selon la revendication 13.
